# NOUVEAU FASCICULE DE BREVET EUROPEEN

(11) **EP 0 843 089 B2**
(45) Date de publication et mention de la décision concernant l'opposition: **15.10.2014**
(45) Mention de la délivrance du brevet: 28.08.2002
(21) Numéro de dépôt: 97402693.2
(22) Date de dépôt: 12.11.1997
(51) Int. Cl.: F02K 1/76

(54) **Système de commande électrique pour inverseur de poussée de turboréacteur**
Elektrisches Steuerungssystem für die Schubumkehrvorrichtung eines Turbotriebwerkes
Electric control system for a turbo jet thrust reverser

(30) Priorité: 14.11.1996 FR 9613861
(43) Date de publication de la demande: 20.05.1998
(73) Titulaire: AIRCELLE, 76700 Gonfreville l'Orcher (FR)
(72) Inventeur: Baudu, Pierre André Marcel, 76600 Le Havre (FR); Gonidec, Patrick, 76290 Montivilliers (FR); Vauchel, Guy Bernard, 76610 Le Havre (FR)
(74) Mandataire: Joly, Jean-Jacques

(56) Documents cités:
- EP-A- 0 267 078
- EP-A- 0 329 477
- GB-A- 959 348
- GB-A- 2 116 129
- GB-A- 2 238 278
- US-A- 3 931 944
- US-A- 4 005 822
- US-A- 4 437 783
- US-A- 4 505 108
- US-A- 4 543 783
- US-A- 4 745 815
- US-A- 4 754 694
- US-A- 5 041 748
- US-A- 5 121 018
- US-A- 5 277 020
- US-A- 5 280 704
- US-A- 5 388 471
- US-A- 5 404 091
- US-A- 5 404 714
- AIRBUS A320 TECHNICAL TRAINING MANUAL Avril 1992, pages 378 - 387
- AIRBUS A330 HANDOUT TRAINING MANUAL Juillet 1994, pages 139 - 142
- HOFFMAN A.C. ET AL: 'ADVANCED SECONDARY POWER SYSTEM FOR TRANSPORT AIRCRAFT' NASA TECHNICAL PAPER 2463 Mai 1985, pages 1 - 35

## Description

L'invention concerne un système de commande électrique pour inverseur de poussée de turboréacteur et s'applique en particulier à la commande des inverseurs de poussée comportant au moins un élément déplaçable coopérant en position déployée à la production de l'inversion de poussée, tels que, par exemple, les inverseurs de poussée à portes, à grilles ou à coquilles pour turboréacteur à double flux.

Les systèmes de commande des inverseurs de poussée à éléments déplaçables, tels que des portes basculantes, sont actuellement composés d'un ensemble d'équipements hydrauliques agencés pour commander l'ouverture et la fermeture des portes de l'inverseur lors d'un cycle d'utilisation de cet inverseur, à l'atterrissage, et à maintenir ces portes fermées dans toutes les autres phases d'utilisation de l'inverseur. Un exemple de réalisation d'un système de commande hydraulique d'un inverseur de poussée est décrit notamment dans le brevet FR 2.435.604 déposé au nom de SNECMA. Un système de commande hydraulique comporte essentiellement des vérins hydrauliques pour manoeuvrer les portes de l'inverseur, des moyens de verrouillage hydrauliques et mécaniques primaires et secondaires pour maintenir les portes en position de verrouillage, un bloc hydraulique de commande et des tuyauteries hydrauliques.
Cependant cette technologie nécessite une génération de puissance hydraulique importante prélevée sur le circuit hydraulique de l'avion et la limitation géométrique des organes de manoeuvres ne permet pas de refermer les portes de l'inverseur dans toute l'enveloppe de vol de l'avion. Par ailleurs, il existe un risque de déploiement intempestif de l'inverseur dans le cas où une panne dormante du verrou secondaire est associée à une rupture du verrou primaire.
Cette technologie présente également des inconvénients liés à l'utilisation d'un liquide hydraulique (appelé skydroll) très corrosif et inflammable. Ce liquide hydraulique rend la maintenance délicate et sa présence dans la zone de la soufflante nécessite une protection accrue du cadre avant de l'inverseur et des équipements hydrauliques.
Enfin, la définition du cheminement des tuyauteries hydrauliques est délicate à réaliser en raison de l'encombrement réduit du cadre avant de l'inverseur.
Le but de l'invention est de réaliser un système de commande pour inverseur de poussée utilisant une technologie différente permettant de résoudre les problèmes rencontrés dans les systèmes de commande hydraulique.
Pour cela, l'invention consiste à réaliser un système de commande d'inverseur de poussée utilisant uniquement des équipements électromécaniques dont la puissance est entièrement fournie par le réseau électrique de l'avion ou par une génératrice intégrée au moteur.
Selon l'invention, ce but est atteint par un système d'inversion de poussée conforme à la revendication 1.

L'ensemble d'organes de manoeuvre électromécaniques comporte essentiellement un vérin électrique linéaire destiné à actionner l'élément déplaçable, au moins un verrou électrique, appelé verrou primaire, de retenue de l'élément déplaçable et des détecteurs d'état des organes de manoeuvre et des éléments déplaçables de l'inverseur.

Avantageusement l'ensemble d'organes de manoeuvre électromécaniques comporte en outre un dispositif de verrouillage secondaire et/ou un verrou électrique tertiaire.

D'autres particularités ou avantages de l'invention apparaîtront clairement dans la suite de la description donnée à titre d'exemple non limitatif et faite en regard de la figure unique annexée qui représente :

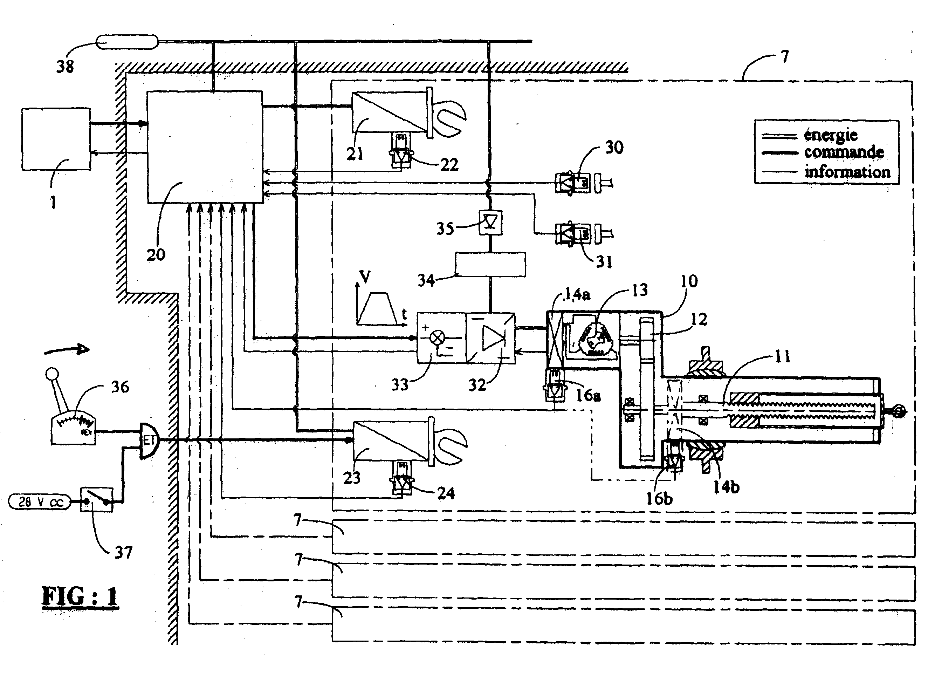

- FIGURE 1, un schéma d'un exemple d'un système de commande électrique pour inverseur de poussée de turboréacteur, selon l'invention.
Le système de commande électrique représenté sur la figure 1 unique est particulièrement bien adapté aux inverseurs de poussée à portes basculantes. Il comporte quatre ensembles 7 identiques d'organes de manoeuvre électromécaniques connectés à un boîtier électronique de commande 20 commun à tous les ensembles 7. Chaque ensemble 7 d'organes de manoeuvre est destiné à actionner une porte de l'inverseur de poussée.
Le boîtier électronique de commande 20 est relié électriquement au système 1 de régulation électronique à pleine autorité du moteur, appelé système FADEC, et contrôle les organes de manoeuvre électromécaniques.
L'alimentation électrique des organes de manoeuvre électromécaniques et du boîtier électronique de commande 20 est effectué par l'intermédiaire de harnais électriques de puissance connectés soit sur le réseau électrique 38 de l'avion sur lequel le turboréacteur est monté, soit à une génératrice intégrée au moteur.
Chaque ensemble 7 d'organes de manoeuvre nécessaires à l'actionnement d'une porte de l'inverseur comporte essentiellement un vérin électrique linéaire 10 qui peut être irréversible, au moins un verrou électrique 21 de retenue de la porte, appelé verrou primaire, des harnais électriques de puissance, de commande et de contrôle et des détecteurs d'état 16a, 16b, 22, 24, 30, 31 des organes de manoeuvre et des portes de l'inverseur. Les détecteurs d'état peuvent être par exemple des détecteurs de proximité ou des détecteurs de position.
Le vérin 10 comporte une vis 11 de transmission destinée à être reliée à une porte de l'inverseur de poussée. La vis peut être simple ou du type à rouleaux ou à billes.
Le pas et le diamètre de la vis sont définis suivant la technologie choisie et suivant les performances recherchées de vitesse et d'irréversibilité. Le vérin peut être de type réversible ou irréversible. L'utilisation d'un vérin irréversible, présente l'avantage de pouvoir maintenir les éléments déplaçables dans n'importe quelle position intermédiaire, sans qu'il soit nécessaire de maintenir une énergie d'alimentation du vérin, ni de mettre en oeuvre un système mécanique supplémentaire.
Un moteur électrique 13 entraîne la vis suivant une loi de commande en vitesse ou une loi de commande du type tout ou rien. La loi de commande est délivrée par le boîtier de commande 20. Le moteur électrique 13 peut être par exemple du type synchrone auto-piloté, asynchrone, ou de tout autre type. Dans le cas d'un moteur synchrone auto-piloté, un boîtier électronique de puissance est associé au moteur 13. Le boîtier électronique de puissance est constitué d'un pont de puissance 32, d'un circuit d'asservissement et de détection de panne 33, d'un filtre électronique 34, et éventuellement d'un redresseur 35 dans le cas où le réseau électrique 38 de l'avion est un réseau à courant alternatif.
Le moteur 13 est relié à la vis 11 par l'intermédiaire d'un réducteur 12. le réducteur peut être par exemple du type à étage, ou du type épicycloïdal, ou de tout autre type.
L'irréversibilité du vérin peut être obtenue, par exemple, en utilisant une vis de transmission 11 irréversible ou en intégrant un ensemble roue et vis sans fin dans le réducteur 12.
Un dispositif de verrouillage secondaire peut être intégré dans le vérin 10. Le dispositif de verrouillage secondaire peut être constitué par exemple par un système de freinage ou de blocage 14a du moteur 13, ou du réducteur 12, ou du vérin 10, ou par un frein à manque de courant 14b appliqué sur la vis de transmission 11. Le dispositif de verrouillage secondaire est destiné à reprendre les chargements de la porte de l'inverseur en cas de défaillance du verrou primaire 21.
Un verrou tertiaire 23 électrique peut être également prévu pour reprendre les chargements de la porte de l'inverseur en cas de défaillance des verrous primaire et secondaire. Le verrou tertiaire est commandé directement à partir du cockpit de l'avion, par la manette 36 d'inversion de poussée, et en fonction d'informations concernant le point de vol, ces informations étant délivrées par des détecteurs de position 37 disposés dans l'avion tels que par exemple, des détecteurs de type roue au sol, altimètre, ou détecteurs de vitesse de l'avion.
Les verrous primaire 21 et tertiaire 23 comportent un système de verrouillage mécanique pouvant être manoeuvré en rotation et/ou en translation et un système de déverrouillage actionné par exemple par un électroaimant ou par un moteur électrique tel qu'un moteur asynchrone ou un moteur couple.
L'état verrouillé ou déverrouillé des verrous primaires 21, des verrous secondaires 14a ou 14b et des verrous tertiaires 23 est surveillé par des systèmes de détection, par exemple des détecteurs de proximité, respectivement 22, 16a ou 16b, 24. Des détecteurs 30, 31 de l'état des portes sont également prévus pour contrôler la position ouverte ou fermée de la porte de l'inverseur. Ces détecteurs peuvent être équipés d'un dispositif d'auto-test relié au boîtier électronique de commande 20 pour déceler les mauvais fonctionnements éventuels des détecteurs et éviter les fausses alarmes de pannes. Le boîtier électronique de commande 20 peut alors transmettre les informations nécessaires au cockpit de l'avion.
Le boîtier électronique de commande 20 est alimenté par exemple par le réseau électrique 38 de l'avion. Ses fonctions sont :
- de traduire les commandes d'ouverture ou de fermeture des portes délivrées par le FADEC en des séquences de commande des verrous primaires 21 et des moteurs 13 des vérins 10 de chaque ensemble 7 d'organes de manoeuvre des portes de l'inverseur. Les séquences de commande s'enchaînent les unes après les autres après contrôle d'un signal d'état des actionneurs commandés, le signal d'état étant délivré et transmis par le détecteur de proximité ou de position associé à l'actionneur commandé. Les séquences de commande des verrous primaires 21 sont des signaux de type tout ou rien, analogiques ou numériques, et insensibles aux perturbations électromagnétiques extérieures. Ces signaux de commande peuvent être par exemple des signaux électriques ou des signaux optiques, ou tout autre type de signal de commande susceptible d'être décodé par des dispositifs électroniques.
   Dans le cas où les moteurs 13 sont des moteurs synchrones auto-pilotés, la commande des vérins 10 d'actionnement des portes de l'inverseur est effectuée par transmission aux moteurs 13 d'une consigne de vitesse.
- d'informer le FADEC sur l'état des différents organes de manoeuvre des portes de l'inverseur et sur la position déployée, refermée ou en transit des portes de l'inverseur. Ces informations sont délivrées par les détecteurs d'état 30, 31, 16a, 16b, 22, 24 et transmises au FADEC.
Les différents organes du système de commande électrique sont reliés entre eux ou au réseau électrique de l'avion par des harnais électriques de puissance ou des harnais de commande et de contrôle.
Les harnais de commande et de contrôle peuvent être des harnais électriques ou utiliser une technologie optique, par exemple des fibres optiques.
Le réseau électrique de puissance du système de commande peut être muni d'un dispositif de coupure automatique pour éviter tout déploiement intempestif des portes de l'inverseur en cas d'incendie. Ce dispositif de coupure automatique peut être réalisé par des points fusibles, par des disjoncteurs ou par tout autre moyen approprié.
Les déplacements des portes ou des éléments déplaçables de l'inverseur de poussée peuvent être synchronisés partiellement ou en totalité par le boîtier électronique de commande, sans qu'il soit nécessaire d'ajouter des organes mécaniques supplémentaires. De même l'ouverture de certaines portes peut s'effectuer avant celle des autres selon l'effet recherché, sans ajout d'organe mécanique supplémentaire. Les déplacements des éléments déplaçables peuvent également être synchronisés par des organes mécaniques spécifiques tel qu'un câble de synchronisation non représenté; dans ce cas, l'utilisation d'organes mécaniques de synchronisation des éléments déplaçables peut être associée à un verrouillage manoeuvré par électro-aimant ou à un moteur électrique disposé sur le câble de synchronisation lui-même.
Les séquences d'ouverture des portes d'un inverseur de poussée à commande électrique sont décrites ci-après dans le cas où le système de commande d'une porte comporte trois verrous respectivement primaire, secondaire et tertiaire tel que représenté sur la figure unique.
La première séquence consiste à déverrouiller les verrous tertiaires 23. Ce déverrouillage est commandé directement par la manette 36 d'inversion de poussée et en fonction de l'état de détecteurs 37 de l'avion. Dès que le déverrouillage est effectif, les détecteurs d'état 24 associés _aux verrous tertiaires envoient un signal au boîtier électronique 20 pour l'informer que les verrous tertiaires sont déverrouillés. A la réception de ce signal, le boîtier électronique de commande 20 met sous tension les moteurs 13 des vérins 10 et commande le déverrouillage des verrous secondaires 14a ou 14b. Les détecteurs d'état 16a ou 16b associés aux verrous secondaires informent le boîtier électronique de commande 20 de l'état déverrouillé des verrous secondaires et à réception de ce signal, le boîtier électronique 20 commande le surescamotage éventuel des vérins et le déverrouillage des verrous primaires 21. Les détecteurs d'état 22 associés aux verrous primaires 21 informent le boîtier électronique de commande 20 de l'état déverrouillé des verrous primaires 21. A réception de ce signal, le boîtier électronique 20 commande les vérins 10 de façon à réaliser l'ouverture des portes de l'inverseur suivant une loi de commande de vitesse en fonction de la course de la porte ou suivant une loi de commande tout ou rien. La loi de commande tout ou rien peut être réalisée par exemple au moyen d'un code numérique.
Dès que les portes ne sont plus fermées, puis lorsqu'elles sont complètement ouvertes, des signaux correspondant à ces états sont envoyés respectivement par les détecteurs 30 et 31 au boîtier électronique de commande 20 qui commande la coupure de l'alimentation électrique des vérins 10.
Cette coupure d'alimentation entraîne un verrouillage des portes de l'inverseur en jet inversé par l'intermédiaire des verrous secondaires 14a ou 14b intégrés dans les vérins 10.
Les séquences de fermeture des portes d'un inverseur de poussée sont les suivantes.
Le boîtier électronique de commande 20 procède à la mise sous tension des moteurs 13 des vérins 10 et au déverrouillage des verrous secondaires 14a ou 14b. Après contrôle de l'état déverrouillé des verrous secondaires, le boîtier électronique 20 commande les vérins 10 de façon à réaliser la fermeture des portes de l'inverseur.
L'enclenchement mécanique des verrous tertiaires, puis des verrous primaires est ensuite réalisé et des signaux correspondant aux états verrouillés de ces deux verrous sont envoyés au boîtier électronique 20 par les détecteurs 24, 22 respectivement.
Enfin, le boîtier électronique de commande 20 commande la coupure de l'alimentation électrique des vérins 10 à la réception du signal délivré par les détecteurs 30, 31 indiquant que les portes de l'inverseur sont fermées.
L'invention n'est pas limitée à l'exemple de réalisation précisément décrit.
En particulier le nombre de verrous n'est pas limité à trois et les séquences d'ouverture et de fermeture des éléments déplaçables doivent être adaptées au nombre des verrous. En particulier, dans le cas où le vérin ne comporte pas de verrou tertiaire, la commande de déverrouillage des verrous secondaires doit être effectuée après la réception d'un signal d'ouverture provenant du cockpit de l'avion et d'un signal provenant des détecteurs de position 37 disposés dans l'avion. L'invention n'est pas limitée aux inverseurs de poussée à portes et peut être appliquée aux inverseurs à grilles. Dans ce cas, les avantages et la technologie du système de commande électrique sont les mêmes que pour un inverseur à portes. Des adaptations sont cependant nécessaires. Notamment, les vérins linéaires du système de commande activent des capots coulissants de l'inverseur à grilles. Les vérins peuvent être reliés entre eux par des câbles de synchronisation. La synchronisation des vérins peut aussi être réalisée par un asservissement électronique de la vitesse des moteurs et/ou du déplacement de la partie mobile des vérins.
La motorisation des vérins est soit individuelle, soit commune à l'ensemble des vérins.
Dans le cas de l'utilisation de câbles de synchronisation, des verrous commandés par un électro-aimant ou par un moteur électrique peuvent être appliqués sur ces câbles.
L'invention peut également être appliquée aux inverseurs à coquilles aval. Dans ce cas, les vérins linéaires sont situées dans des poutres latérales de l'inverseur ou dans l'axe des coquilles, et peuvent activer les coquilles par l'intermédiaire de bielles.
Le système de commande électrique pour inverseur de poussée présente de nombreux avantages. En particulier, pour obtenir une fermeture complète de l'inverseur de poussée dans tous les domaines de vol et à tous les régimes du moteur, la performance des vérins électriques 10 peut être modifiée, sans qu'il soit nécessaire de modifier leur structure, en modifiant la puissance du moteur électrique 13. Par ailleurs, l'utilisation de vérins à vis irréversible permet de supprimer le risque de déploiement intempestif des éléments déplaçables de l'inverseur et permet d'effectuer le positionnement et le verrouillage des éléments déplaçables de l'inverseur dans n'importe quelle position entre celle du jet direct (position de fermeture de l'inverseur) et, celle du jet inversé (position d'ouverture de l'inverseur de poussée). L'utilisation d'une commande électronique permet de piloter une ouverture partielle ou complète des éléments déplaçables de l'inverseur et de contrôler ainsi l'intensité de la force de contre poussée, pour des cas de manoeuvre de l'avion au sol par exemple.
Le remplacement des tuyauteries hydrauliques par des harnais électriques permet une installation et une maintenance plus aisées et la suppression du liquide hydraulique très corrosif, appelé skydroll, rend la maintenance moins dangereuse. En outre, la suppression de ce produit inflammable permet de réduire la protection des organes de commandes de l'inverseur et de réduire en conséquence la masse et le coût du système de commande.

## Revendications

1. Système d'inversion de poussée de turboréacteur monté sur un avion avec un inverseur de poussée ayant au moins un élément déplaçable entre une position de fermeture et une position d'ouverture et un circuit de commande électrique d'inverseur comprenant au moins un ensemble (7) d'organes de manoeuvre électromécaniques pour manoeuvrer l'élément déplaçable entre les positions de fermeture et d'ouverture de l'inverseur de poussée, **caractérisé en ce que** le circuit de commande électrique comprend en outre
un boîtier électronique de commande (20) des organes de manoeuvre électromécaniques relié électriquement à un système (1) de régulation électronique du turboréacteur et à des détecteurs (16a, 16b, 22, 24, 30, 31) d'état verrouillé ou déverrouillé des organes de manoeuvre et de position des éléments déplaçables,
le boîtier électronique de commande recevant des commandes d'ouverture ou de fermeture des éléments déplaçables délivrées par le système de régulation électronique, traduisant les commandes d'ouverture ou de fermeture en des séquences de commande des organes de manoeuvre électromécaniques à partir de signaux reçus desdits détecteurs, et fournissant au système de régulation électronique des informations fournies par les détecteurs d'état sur l'état verrouillé ou déverrouillé des organes de manoeuvre et la position des éléments déplaçables.

2. Système selon la revendication 1, **caractérisé en ce que** l'ensemble (7) d'organes de manoeuvre électromécaniques comporte essentiellement un vérin électrique linéaire (10) destiné à actionner l'élément déplaçable, au moins un verrou électrique (21), appelé verrou primaire, de retenue de l'élément déplaçable et des détecteurs d'état (16a, 16b, 22, 24, 30, 31) des organes de manoeuvre et des éléments déplaçables de l'inverseur.

3. Système selon la revendication 2, **caractérisé en ce que** le vérin électrique (10) est irréversible.

4. Système selon l'une quelconque des revendications 2 ou 3, **caractérisé en ce que** le vérin électrique (10) comporte une vis (11) de transmission destinée à être reliée à l'élément déplaçable de l'inverseur, la vis (11) de transmission étant entraînée par un moteur électrique (13) commandé par le boîtier électronique de commande (20).

5. Système selon la revendication 4, **caractérisé en ce que** le moteur électrique (13) est relié à la vis (11) de transmission par l'intermédiaire d'un réducteur (12).

6. Système selon l'une quelconque des revendications 4 ou 5, **caractérisé en ce que** le moteur électrique (13) est un moteur synchrone auto-piloté associé à des moyens électroniques de puissance comportant un pont de puissance (32), un circuit d'asservissement et de détection de panne (33) et un filtre électronique (34).

7. Système selon l'une quelconque des revendications précédentes, **caractérisé en ce qu'**un dispositif de verrouillage secondaire est intégré dans le vérin électrique (10).

8. Système selon la revendication 7, **caractérisé en ce que** le dispositif de verrouillage secondaire est constitué par des moyens de freinage (14a) du moteur électrique (13).

9. Système selon la revendication 7, **caractérisé en ce que** le dispositif de verrouillage secondaire est constitué par des moyens de freinage (14b) de la vis (11) de transmission.

10. Système selon l'une quelconque des revendications précédentes, **caractérisé en ce qu'**il comporte en outre un verrou électrique tertiaire (23) destiné à être commandé directement par une manette (36) d'inversion de poussée et en fonction d'informations délivrées par des détecteurs (37) de position de l'avion.

11. Système selon l'une quelconque des revendications 2 à 10, **caractérisé en ce que** les détecteurs d'état (22, 16a, 16b, 24) sont associés respectivement aux verrou primaire, secondaire et tertiaire et les détecteurs d'état (30, 31) sont destinés à être reliés à l'élément déplaçable de l'inverseur, tous les détecteurs d'état étant reliés au boîtier électronique de commande (20) par des harnais.

12. Système selon l'une quelconque des revendications précédentes, **caractérisé en ce que** les organes de manoeuvre électromécaniques et le boîtier électronique de commande (20) sont alimentés par un réseau électrique de puissance constitué par le réseau électrique de l'avion.

13. Système selon l'une quelconque des revendications 1 à 11, **caractérisé en ce que** les organes de manoeuvre électromécaniques et le boîtier électronique de commande (20) sont alimentés par un réseau électrique de puissance constitué par une génératrice intégrée au turboréacteur.

14. Système comportant plusieurs éléments déplaçables selon l'une quelconque des revendications 2 à 13, **caractérisé en ce qu'**il comporte plusieurs vérins électriques (10) synchronisés électroniquement par le boîtier électronique de commande (20).

15. Système comportant plusieurs éléments déplaçables selon l'une quelconque des revendications 2 à 13, **caractérisé en ce qu'**il comporte plusieurs vérins électriques (10) synchronisés par un câble de synchronisation.

## Patentansprüche

1. Schubumkehrsystem eines an einem Flugzeug angebrachten Turbostrahltriebwerks, mit einer Schubumkehrvorrichtung, die wenigstens ein Element umfasst, das zwischen einer Schließstellung und einer Öffnungsstellung beweglich ist, sowie einem Kreis zur elektrischen Steuerung der Umkehrvorrichtung, der wenigstens eine Anordnung (7) von elektromechanischen Betätigungsorganen zur Betätigung des zwischen der Schließ- und der Öffnungsstellung der Schubumkehrvorrichtung beweglichen Elements umfasst, **dadurch gekennzeichnet, dass** der elektrische Steuerkreis ferner umfasst
eine elektronische Einheit zur Steuerung (20) der elektromechanischen Betätigungsorgane, die mit einem System (1) zur elektronischen Regelung des Turbostrahltriebwerks und mit Detektoren (16a, 16b, 22, 24, 30, 31) für den verriegelten oder entriegelten Zustand der Betätigungsorgane und die Position der beweglichen Elemente elektrisch verbunden ist,
wobei die elektronische Steuereinheit Befehle zum Öffnen oder Schließen der beweglichen Elemente empfängt, die durch das elektronische Regelungssystem geliefert werden, die Öffnungs- oder Schließbefehle anhand von Signalen, die von den Detektoren empfangen werden, in Sequenzen zur Steuerung der elektromechanischen Betätigungsorgane umsetzt und dem elektronischen Regelungssystem durch die Zustandsdetektoren bereitgestellte Informationen über den verriegelten oder entriegelten Zustand der Betätigungsorgane und die Position der beweglichen Elemente liefert.

2. System nach Anspruch 1, **dadurch gekennzeichnet, dass** die Anordnung (7) von elektromechanischen Betätigungsorganen im Wesentlichen ein elektrisches Linearstellglied (10), das dazu bestimmt ist, das bewegliche Element zu betätigen, wenigstens einen elektrischen Riegel (21), als Primärriegel bezeichnet, zum Halten des beweglichen Elements sowie Detektoren für den Zustand (16a, 16b, 22, 24, 30, 31) der Betätigungsorgane und der beweglichen Elemente der Umkehrvorrichtung umfasst.

3. System nach Anspruch 2, **dadurch gekennzeichnet, dass** das elektrische Stellglied (10) unumkehrbar ist.

4. System nach einem der Ansprüche 2 oder 3, **dadurch gekennzeichnet, dass** das elektrische Stellglied (10) eine Übertragungsschnecke (11) umfasst, die dazu bestimmt ist, mit dem beweglichen Element der Umkehrvorrichtung verbunden zu werden, wobei die Übertragungsschnecke (11) durch einen Elektromotor (13) angetrieben wird, der durch die elektronische Steuereinheit (20) gesteuert wird.

5. System nach Anspruch 4, **dadurch gekennzeichnet, dass** der Elektromotor (13) über ein Untersetzungsgetriebe (12) mit der Übertragungsschnecke (11) verbunden ist.

6. System nach einem der Ansprüche 4 oder 5, **dadurch gekennzeichnet, dass** der Elektromotor (13) ein selbstgesteuerter Synchronmotor ist, der elektronischen Leistungsmitteln zugeordnet ist, die eine Leistungsbrücke (32), einen Regel- und Störungserfassungskreis (33) sowie ein elektronisches Filter (34) umfassen.

7. System nach einem der vorhergehenden Ansprüche, **dadurch gekennzeichnet, dass** eine sekundäre Verriegelungsvorrichtung in das elektrische Stellglied (10) integriert ist.

8. System nach Anspruch 7, **dadurch gekennzeichnet, dass** die sekundäre Verriegelungsvorrichtung von Mitteln zum Bremsen (14a) des Elektromotors (13) gebildet ist.

9. System nach Anspruch 7, **dadurch gekennzeichnet, dass** die sekundäre Verriegelungsvorrichtung von Mitteln zum Bremsen (14b) der Übertragungsschnecke (11) gebildet ist.

10. System nach einem der vorhergehenden Ansprüche, **dadurch gekennzeichnet, dass** es ferner einen tertiären elektrischen Riegel (23) umfasst, der dazu bestimmt ist, direkt durch einen Schubumkehrhebel (36) sowie in Abhängigkeit von durch Detektoren (37) für die Flugzeugposition gelieferten Informationen gesteuert zu werden.

11. System nach einem der Ansprüche 2 bis 10, **dadurch gekennzeichnet, dass** die Zustandsdetektoren (22, 16a, 16b, 24) dem Primärriegel, dem Sekundärriegel bzw. dem tertiären Riegel zugeordnet sind, und die Zustandsdetektoren (30, 31) dazu bestimmt sind, mit dem beweglichen Element der Umkehrvorrichtung verbunden zu werden, wobei alle Zustandsdetektoren über elektrische Leitungen mit der elektronischen Steuereinheit (20) verbunden sind.

12. System nach einem der vorhergehenden Ansprüche, **dadurch gekennzeichnet, dass** die elektromechanischen Betätigungsorgane und die elektronische Steuereinheit (20) über ein Leistungsstromversorgungsnetz, das von dem Stromversorgungsnetz des Flugzeugs gebildet ist, versorgt werden.

13. System nach einem der Ansprüche 1 bis 11, **dadurch gekennzeichnet, dass** die elektromechanischen Betätigungsorgane und die elektronische Steuereinheit (20) über ein Leistungsstromversorgungsnetz, das von einem in das Turbostrahltriebwerk integrierten Generator gebildet ist, versorgt werden.

14. System mit mehreren beweglichen Elementen nach einem der Ansprüche 2 bis 13, **dadurch gekennzeichnet, dass** es mehrere elektrische Stellglieder (10) umfasst, die durch die elektronische Steuereinheit (20) elektronisch synchronisiert sind.

15. System mit mehreren beweglichen Elementen nach einem der Ansprüche 2 bis 13, **dadurch gekennzeichnet, dass** es mehrere elektrische Stellglieder (10) umfasst, die durch ein Synchronisationskabel synchronisiert sind.

## Claims

1. A turbojet engine thrust reverser system fixed to an airplane with a thrust reverser having at least one movable element movable between a reverser closed position and a reverse open position and a reverser electric control circuit comprising at least one set (7) of electromechanical drive devices for driving the movable element between the reverser closed and open positions, **characterized in that** the reverser electric control circuit further comprises
an electronic control unit (20) for controlling the electromechanical drive devices which is electrically connected to an electronic turbojet regulating system (1) and to sensors (16a, 16b, 22, 24, 30, 31) for monitoring the locked or unlocked status of the drive devices and the position of the movable elements,
the electronic control unit receiving commands for opening or closing the movable elements which are issued by the electronic turbojet regulating system, implementing the opening or closing commands into control sequences of the electromechanical drive devices using signals received from said sensors, and providing to the electronic turbojet regulating system information delivered by the status sensors relative to the locked or unlocked status of the drive devices and to the position of the movable elements.

2. System according to claim 1, **characterized in that** the set (7) of electromechanical drive devices comprises essentially a linear electric actuator (10) intended to move the movable element, at least one electric lock (21), named primary lock, which locks the movable element, and status sensors (16a, 16b, 22, 24, 30, 31) of the drive devices and the movable elements of the reverser.

3. System according to claim 2, **characterized in that** the linear electric actuator (10) is irreversible.

4. System according to claim 2 or claim 3, **characterized in that** the linear electric actuator (10) comprises a transmission screw (11) intended to be connected to the movable element of the reverser, the transmission screw (11) being rotated by an electric motor (13) controlled by the electronic control unit (20).

5. System according to claim 4, **characterized in that** the electric motor (13) is connected to the transmission screw (11) via a reduction gear box (12).

6. System according to claim 4 or claim 5, **characterized in that** the electric motor (13) is a self-controlled synchronous motor associated with power electronics comprising a power bridge (32), a control and fault detection circuit (33) and an electronic filter (34).

7. System according to any one of the preceding claims, **characterized in that** a secondary locking device is incorporated into the electric actuator (10).

8. System according to claim 7, **characterized in that** the secondary locking device consists of means (14a) of braking the electric motor (13).

9. System according to claim 7, **characterized in that** the secondary locking device consists of means (14b) of braking the transmission screw (11).

10. System according to any one of the preceding claims, **characterized in that** it further comprises a tertiary electric latch (23) intended to be controlled directly by a thrust reversal lever handle (36) and on the basis of information delivered by detectors (37) detecting the position of the aeroplane.

11. System according to any one of claims 2 to 10, **characterized in that** the status sensors (22, 16a, 16b, 24) are associated respectively with the primary, secondary and tertiary latches and the status sensors (30, 31) are intended to be connected to the movable element of the reverser, all the status sensors being connected to the electronic control unit (20) by harnesses.

12. System according to any one of the preceding claims, **characterized in that** the electromechanical drive devices and the electronic control unit (20) are powered by an electric power network consisting of the aeroplane electric network.

13. System according to any one of claims 1 to 11, **characterized in that** the electromechanical drive devices and the electronic control unit (20) are powered by an electric power network consisting of a generator incorporated into the turbojet.

14. System according to any one of claims 2 to 13, **characterized in that** it comprises several electric actuators (10) synchronized electronically by the electronic control unit (20).

15. System according to any one of claims 2 to 13, **characterized in that** it comprises several electric actuators (10) synchronized by a synchronization cable.
